Europäisches Patentamt

European Patent Office

Office européen des brevets

(11) Publication number: **0 360 823 B1**

# EUROPEAN PATENT SPECIFICATION

(45) Date of publication of patent specification: **11.11.92**  (51) Int. Cl.⁵: **G03B 42/04**

(21) Application number: **88904531.6**

(22) Date of filing: **24.05.88**

(86) International application number:
**PCT/EP88/00462**

(87) International publication number:
**WO 88/09525 (01.12.88 88/26)**

(54) **DEVICE FOR OPENING AND CLOSING A SHEET-FILM CASSETTE.**

(30) Priority: **26.05.87 DE 3717786**

(43) Date of publication of application:
**04.04.90 Bulletin 90/14**

(45) Publication of the grant of the patent:
**11.11.92 Bulletin 92/46**

(84) Designated Contracting States:
**AT CH DE FR GB LI**

(56) References cited:
**DE-A- 2 607 876      DE-A- 2 845 077
DE-U- 8 619 938      FR-A- 1 250 802
FR-A- 2 474 181      GB-A- 1 501 116
US-A- 4 049 142**

(73) Proprietor: **KODAK AKTIENGESELLSCHAFT
Postfach 60 03 45
W-7000 Stuttgart 60(DE)**
(84) Designated Contracting States:
**DE**

(73) Proprietor: **EASTMAN KODAK COMPANY (a**

**New Jersey corporation)
343 State Street
Rochester New York 14650(US)**
(84) Designated Contracting States:
**CH FR GB LI AT**

(72) Inventor: **MIRLIEB, Bernd
Lutherstrasse 16
W-7012 Fellbach(DE)**
Inventor: **KILLGUSS, Heinrich
Im Haldenrain 45
W-7014 Kornwestheim(DE)**
Inventor: **OUANZ, Gerhard
Tiroler Strasse 82
W-7000 Stuttgart 61(DE)**

(74) Representative: **Lewandowsky, Klaus Dipl.-
Ing. et al
Kodak Aktiengesellschaft Patentabteilung
Postfach 600345
W-7000 Stuttgart 60(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a device for opening and closing a sheet-film cassette which comprises two cassette portions connected by a hinge and a locking member pivotably mounted to the free end of the cover portion, the opening device comprising an unlocking member actuating the locking member and an opening member pivoting the cover portion to its open position.

In the case of a known device of this type (DE-PS 26 07 876) the cassette is unlocked by an arm pivotably arranged in the area of one free end of the cassette whereas the cassette is opened by a suction arm mounted for pivotable and shifting movement on the opposite end of the cassette. The cassette is closed in that the cassette portions are pressed to their closed position when passing through a roller nip. In the case of this known device, the cassette lock is unlocked in opposition to a relatively high closing force caused by the cassette portions' own pre-tension, which requires considerable force to be exerted for the unlocking, in addition to the cassette lock being exposed to considerable wear and tear. Moreover the control is made complicated by the spaced arrangement of the unlocking and opening means respectively.

It is the object of the invention to design a device of the generic type such that the cassette can be reliably opened without much force being exerted and with a reduced number of technical means.

In accordance with the invention this object is attained in that the opening device comprises a reciprocatable cassette-opening member hinged to a crank arm, in that the cassette-opening member engages with its free end below the locking member, in that entrainment means engaging below the cover portion of the cassette are pivotably mounted at the free end of the cassette-opening member and in that the free end of the cassette-opening member is guided on a door which is movable in the direction of opening of the cassette-cover portion and closes a cassette unloading and reloading station in a light-tight manner.

Advantageously the door guiding the cassette-opening member is provided with pressure pins associated with the locking device of the cassette and relieving the locking device from pressure during the opening operation.

According to another useful modification of the invention the cassette-opening member is guided by entrainment means resiliently arranged on the door and inclined with respect to the direction of the reciprocating movement of the cassette-opening member, which allows various cassette lengths to be handled without problems.

According to another useful modification of the invention cams are arranged on a shaft which drives the cassette-opening member, said cams controlling an entrance door and an exit door of the unloading and reloading station as well as a roller support with rollers arranged in the path of movement of the cassette.

Further features and advantages can be inferred from the description of an embodiment of the invention illustrated in the drawings and from the subclaims. The drawings show schematically in

Fig. 1 a lateral sectional view of the device in its initial position;

Fig. 2 the device according to Fig. 1 with the cassette in its open position;

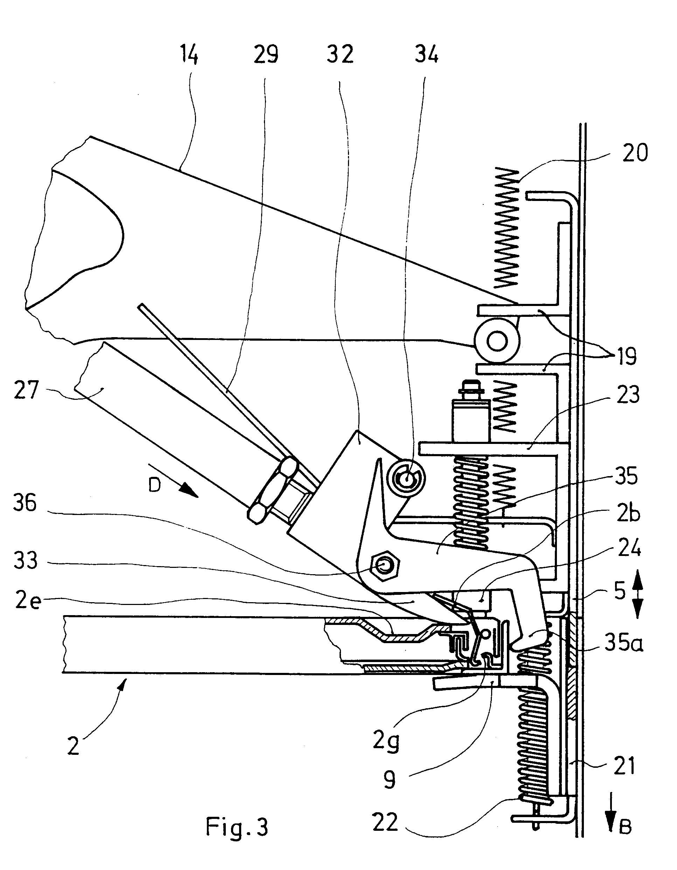

Fig. 3 a partial view of the device according to Fig. 1 during the unlocking operation;

Figs. 4 to 6 details of the device according to Fig. 3, with a stepwise representation of the unlocking operation, and

Fig. 7 a plan view of a cassette.

The device 1 according to the invention forms part of an apparatus not illustrated for automatically unloading and reloading X-ray film cassettes 2, wherein an exposed sheet film is removed from a cassette 2 and fed directly to a film-processing unit not illustrated and wherein the empty cassette 2 is loaded with another sheet film which is removed from a supply magazine arranged below the device 1.

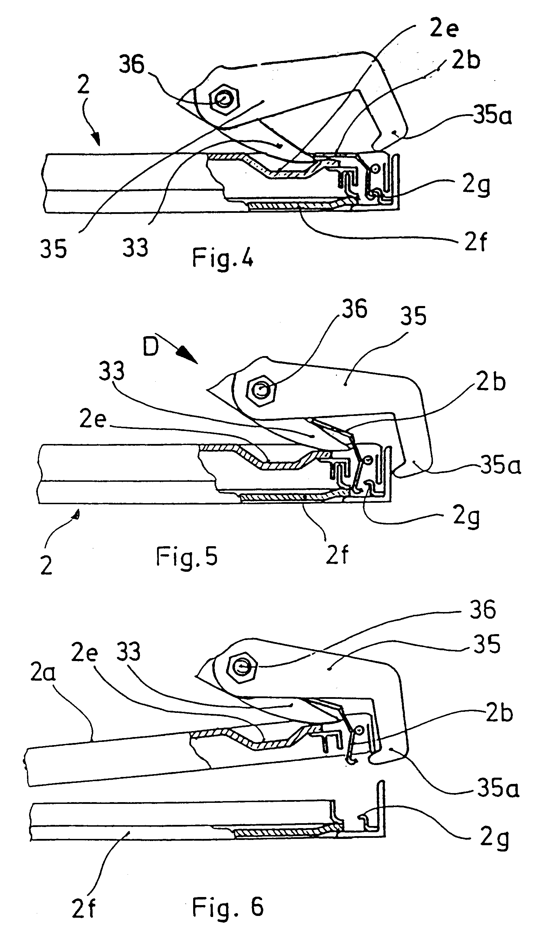

The cassette 2 used consists of two cassette portions 2a, 2f connected by a hinge 2d and lockable in their closed position by a locking member 2b. The locking member 2b which is pivotably mounted on the cassette-cover portion 2a and spring biased in the closing direction engages a locking hook 2g arranged in the lower cassette portion 2f, see in particular Fig. 4. The cassette portions 2a, 2f are closable in opposition of their own pre-tension, which causes the cassette portions 2a, 2f to be easily opened when the cassette 2 is unlocked. In the area of locking member 2b, the cover portion 2a is provided with a gripping hole 2e which is adapted to move below the locking member 2b.

The device 1 according to the invention comprises a light-tight unloading and reloading station 3 which features at its front side (cassette input) and at the opposite rear side (removal of sheet film and loading of sheet film) passage openings which can be closed in a light-tight manner by doors 4, 5.

A short support table 6 with a freely rotating roller 7 which extends across the whole width of the cassette is arranged on the lower side of the front passage opening (cassette input).

On a line coincident with the support table 6, a transport belt 8 is located in the unloading and reloading station 3, a stationary support 9 being arranged at the end of said belt.

Above the transport belt 8, three stationary shafts 10, 11 and 12 are disposed, shaft 10 of which is driven by an electric motor not illustrated to carry out a reciprocating rotary movement.

The driven shaft 10 controls a cassette-opening member 27, two control levers 14, two door actuators 13 and two roller supports 15. Components which are present twice are identically designed and arranged at a distance from each other substantially symmetrically with respect to the longitudinal central line of the unloading and reloading station 3.

The cassette-opening member 27 is associated with the centrally disposed locking member 2b of cassette 2 which is aligned with respect to the center in the unloading and reloading station 3 by means not illustrated.

One control lever 14, one door actuator 13, and one roller support 15 each are located side by side at the left and the right of the cassette-opening member 27 seen in the longitudinal direction of the shafts 10, 11 and 12, at a distance from said member and approximately symmetrically therewith.

For the sake of clarity, only one control lever 14, door actuator 13 and roller support 15 respectively will be described in the following because counterparts are identical, as mentioned before, and also arranged and functioning in the same way.

Cams not illustrated which are associated with the door actuators 13 and the roller supports 15 and control their movement are mounted on the shaft 10.

The door actuator 13 is mounted for pivotal movement about shaft 11 and engages the entrance door 4. Entrance door 4 makes contact with the door actuator 13 under the action of a spring 16 biased in the closing direction and urges that actuator into contact with the associated cam on shaft 10.

The roller support 15 is mounted for pivotal movement about shaft 12 and is moved into contact with the associated cam on shaft 10 by a spring 17 hooked on shaft 11.

At its end facing the entrance door 4, the roller support 15 supports a number of rollers 18 mounted for rotation about a shaft 28 and arranged at a distance from each other, said rollers serving to urge a cassette 2 loaded into the device into contact with the transport belt 8. Roller support 15 also has a switch function to be described further below. Between the entrance door 4 and the rollers 18, inductive sensors are positioned which determine whether cassette 2 has been properly fed with its locking portion 2b positioned at the front.

The control lever 14 is pivotably mounted with one end on shaft 11 and with its other end positively engages a fork-shaped projection 19 of the exit door 5.

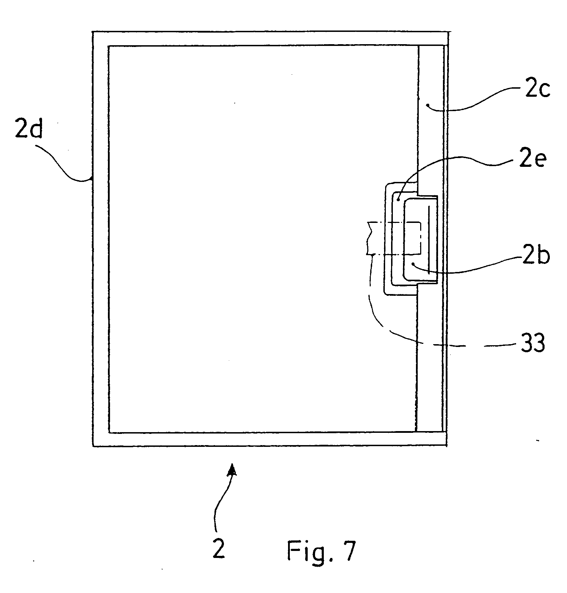

On a further fork-shaped projection 23, 25 of exit door 5, a pressure pin 24 is arranged which is mounted to the projection 23 and guided in a bore of projection 25. Pressure pin 24 is biased by a pressure spring 26. Two pressure pins 24 arranged symmetrically with respect to the cassette-opening member 27 are provided which engage a metal bar 2c (Fig. 7) of the cassette-cover portion 2a and which serve for pressure relief of the locking device 2b, 2g during the unlocking and closing operations.

The movement of the exit door 5 is limited in its closing direction by an abutment 21. The abutment 21 is movable in opposition to the action of the tension spring 22 from an abutment position in the direction of the arrow "B" when the pressure pins 24 mounted to the exit door 5 become operative, which necessitates an excess travel of the exit door 5.

Two entrainment sheets 29 are shiftably guided in pin-and-slot arrangements on the inner side of the exit door 5, said arrangements being associated with the cassette-opening member 27 and arranged symmetrically therewith. Each entrainment sheet 29 is engaged by a tension spring 20 which pulls said sheet towards an end abutment of the pin-and-slot arrangement.

The cassette-opening member 27 is pivotably mounted via a shaft 30 to a crank arm 31 which is secured against rotation on shaft 10. At its free end the cassette-opening member 27 comprises a U-shaped mounting portion 32 and a wedge-shaped tip 33 associated with the locking member 2b of the cassette-cover portion 2a. The two legs of the U-shaped mounting portion 32 mount a shaft 34 with rollers not illustrated. The entrainment sheets 29 which guide the cassette-opening member 27 in a manner to be described further below extend into the opening below the rollers (shaft 34).

On either side of mounting portion 32, entrainment members 35 are arranged for pivotable movement about a pin 36. said members resting on shaft 34 under the action of their own weight. Hookshaped arms 35a of the entrainment members 35 are associated with the end side of the cassette 2 and the cassette-cover portion 2a respectively and serve for engagement of the cover portion 2a after it has been unlocked. The cassette-opening member 27 can be adjusted in length.

The control levers 14 are provided with a hole whose walls form a cam 14a, 14b. The cam 14a, 14b is engaged by a rotatably mounted roller each (not illustrated) which is mounted on an arm congruent with the crank arm 31 and secured against rotation on shaft 10 in the same way as said arm.

The device functions as follows:

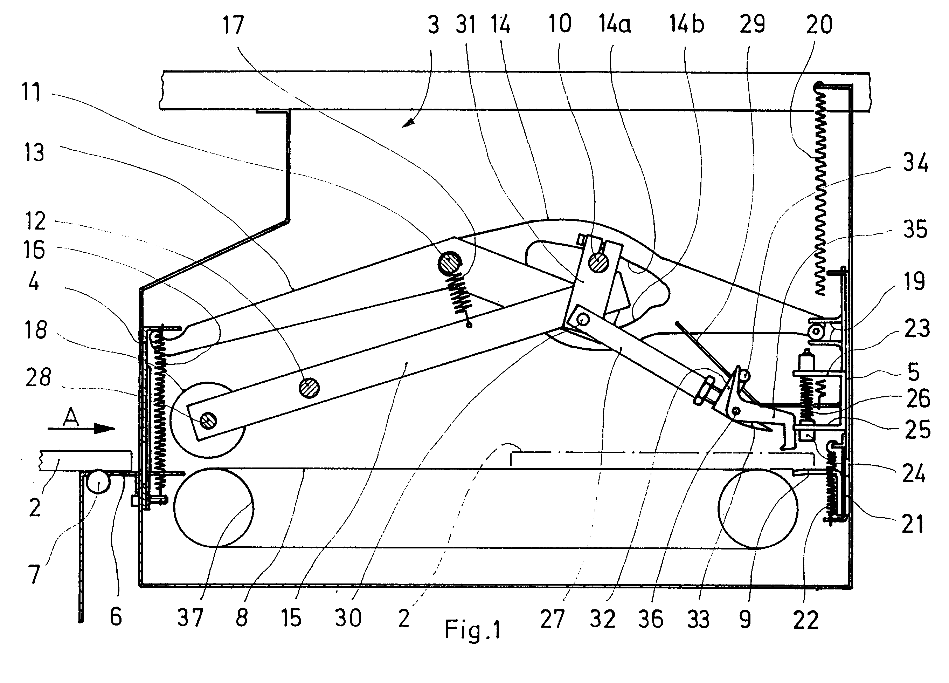

The initial position of the device is shown in Fig. 1 in which the entrance door 4 is open and the exit door 5 closed. The cassette-opening member 27 assumes a ready position in which the entrance path is cleared whilst the roller support 15 is in a lower position in which it extends with its rollers 18 into the entrance path.

The cassette 2 is placed on the support table 6 with its locking portion 2b facing upwards and its metal bar 2c at the front and is shifted into the unloading and reloading station 3 in the direction of the arrow "A". The inductive sensors arranged in the entrance area sense the metal bar (feeding of the cassette in its proper position) and start the transport belt 8.

The roller support 15 with the rollers 18 is urged upwardly by the front edge of cassette 2. During such pivotal movement a switch not illustrated is actuated which signalizes the feeding of a cassette 2 and starts a timer. Under the action of spring 17 the rollers 18 urge the cassette 2 into contact with the transport belt 8 in order to ensure proper frictional contact. On the support table 6, the cassette 2 fed is supported by roller 7 whereby friction in the entrance area is reduced.

When, in response to the starting timer, the point of gravity of the cassette 2 of maximum size and thus the point of gravity of any other cassette available has passed a front transport-belt roller 37, the roller support 15 is lifted so that cassette 2 can be aligned centrally and parallely to a fixed abutment at the end side by means not illustrated without pressure exerted by the rollers.

Moreover in the unloading and reloading station 3, the size (sheet-film format) of the cassette 2 fed in is determined and the information transmitted to a control device for the loading device.

After cassette 2 has assumed its aligned position, shaft 10 is rotated counterclockwise to lower the roller support 15, the entrance door 4 is released for closing by door actuator 13 and the cassette-opening member 27 is put in operation.

For this purpose, the cassette-opening member 27 slides with its rollers arranged on shaft 34 along the entrainment sheets 29 downwardly towards the locking member 2g, said sheets being inclined downwardly in the direction of the reciprocating movement of the cassette-opening member 27.

During such rotary movement of shaft 10 control lever 14 is at the same time urged downwardly via cam 14b, as a result of which exit door 5 urges its spring-biased abutment 21 in opposition to tension spring 22 downwardly in the direction of the arrow "B". As a result the spring-loaded pressure pins 24 can make contact with the metal bar 2c of cassette-cover portion 2a and urge the cover portion 2a slightly downwardly. During such operation the locking device 2b, 2g of cassette 2 is relieved from pressure so that the cassette can be opened readily without much force having to be exerted.

While the locking device 2b, 2g is being relieved from pressure, it is unlocked in that the tip 33 of the cassette-opening member 27 moving downwardly towards the right in the direction of the arrow "D" engages the gripping hole 2e of the cover portion 2a below locking member 2b (see Fig. 4) and urges said member upwardly as shown in Fig. 5. During such operation locking member 2b is disengaged from the engagement hook 2g of the lower portion 2f so that cassette 2 is unlocked.

At the beginning of the locking operation, the hook arms 35a of the entrainment members 35 rest on the cover portion 2a (see Fig. 4) and, during the unlocking operation as shown in Fig. 5, drop to a position in front of the end side of cassette 2.

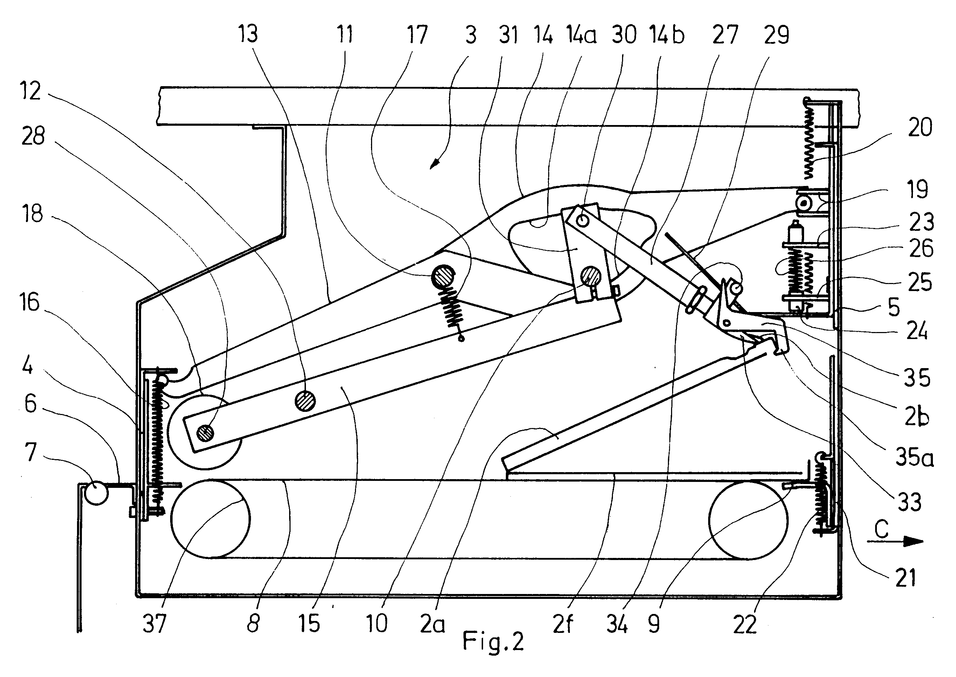

When shaft 10 is further rotated in the counterclockwise direction, the control lever 14 is pivoted counterclockwise via cam 14a and thus opens the exit door 5, see Fig. 2. During such opening movement the entrainment sheets 29 mounted on the exit door 5 are also moved upwardly and entrain the cassette-opening member 27 via the shaft 34 so that tip 33 lifts the cover portion 2a by engaging the locking member 2b. This causes the hook arms 35a of the entrainment members 35 to drop to a position below the front side of cover portion 2a as shown in Fig. 6 and to grip and hold said cover portion. Cover portion 2a is lifted up to the open position shown in Fig. 2.

The path allowed by the entrainment sheets 29 is dimensioned such that it is appropriate to the kinematics of the opening operation for various cassette lengths, the tension springs 20 compensating differences in the path length. The entrainment sheets 29 guide the cassette-opening member 27 reliably and protected from damage even if, on the one hand, the cassette 2 is fed into the unloading and reloading station 3 such that it cannot be opened and, on the other hand, the opening movement is released without a cassette 2 having been fed.

In the position of the device shown in Fig. 2, the exposed sheet film is removed from cassette 2 and subsequently a new sheet film loaded into cassette 2. The unloading and reloading means of a known type not illustrated which are required for this operation (movable suction arm and transport rollers) are arranged outside the unloading and reloading station 3 and become operative through the opening cleared by the exit door 5. The exposed sheet film is fed in the direction of the arrow "C" to a film-processing unit connected to the device in a light-tight manner.

The new sheet film is removed from a corresponding supply magazine (not shown) in response to the sheet-film size determined in the unloading and reloading station 3 and is loaded into the empty cassette 2.

After cassette 2 has been loaded with a new sheet film, it is closed. For this purpose, the device is driven in the reverse direction by clockwise rotation of shaft 10. The cassette-opening member 27 thereby pivots downwardly following the radius of the closing cassette-cover portion 2a, and the exit door 5 is closed via control lever 14.

When the hook arms 35a of the entrainment members 35 have arrived in the lower position of the cassette-opening member 27, they make contact with the lower portion 2f of cassette 2 and are pivoted out of their holding position so that they release the cover portion 2a.

During the clockwise rotation of shaft 10, the exit door 5 already closed is urged downwardly by control lever 14 in opposition to the resilient abutment 21, the pressure pins 24 pressing the cover portion 2a downwardly. While the pressure pins 24 are operative the cassette-opening member 27, 33, 35 is disengaged by retraction. As soon as tip 33 of the cassette-opening member 27 has been disengaged from locking member 2b, locking member 2b is engaged by the hook 2g under the action of its spring so that cassette 2 is closed and locked. After locking the exit door 5 is lifted by spring 22 until the pressure pins 24 are disengaged from the metal bar 2c of cassette 2.

In this position of the device, which is illustrated in Fig. 1, the exit door 5 is closed and the entrance door 4 opened. The roller support 15 with its rollers 18 is located in its lower position, and the transport belt 8 feeds the cassette 2 loaded with a new film in the reverse direction out of the unloading and reloading station 3.

As soon as the rear edge of cassette 2 lifts the roller support 15 with its rollers 18, a timer is started which switches off the drive of transport belt 8 after a predetermined time. The period is chosen such that each cassette 2, irrespective of its size, is fed out of the apparatus by the same distance so that it can be manually removed. During such feeding-out the roller support 15 with its rollers 18 is lifted off cassette 2 so that it can be removed without resistance.

As soon as the metal bar 2c of cassette 2 has passed the inductive sensors, the roller support 15 is lowered again so that the device assumes its starting position as shown in Fig. 1. From this position a new unloading and reloading cycle can be started by the feeding of a cassette 2.

**Claims**

1. Device for opening and closing a sheet-film cassette which comprises two cassette portions connected by a hinge and a locking member pivotably mounted to the free end of the cover portion, the opening device comprising an unlocking member actuating the locking member and an opening member pivoting the cover portion to its open position, **characterized** in that the opening device comprises a reciprocatable cassette-opening member (27) hinged to a crank arm (31), in that the cassette-opening member (27) engages with its free end below the locking member (2b), in that entrainment members(35) engaging below the cover portion (2a) of the cassette are pivotably mounted at the free end of the cassette-opening member (27) and in that the free end of the cassette-opening member (27) is guided on a door (5) movable in the opening direction of the cassette-cover portion and closing a cassette unloading and reloading station (3) in a light-tight manner.

2. Device according to claim 1, characterized in that the crank arm (31) is mounted to a motor-driven shaft (10) and in that at least one control arm is fastened to the shaft (10), said control arm engaging at least one cam (14a, 14b) of a control lever (14) moving the door (5).

3. Device according to claims 1 and 2, characterized in that spring-biased entrainment sheets (29) are shiftably guided on the door (5) in the opening direction of the cassette-cover portion and in that the free end of the cassette-opening member (27) is guided on the entrainment sheets (29).

4. Device according to claims 1 to 3, characterized in that the entrainment sheets (29) are arranged at an angle to the door (5) which extends approximately in the direction of the reciprocating movement of the cassette-opening member (27).

5. Device according to one or several of claims 1 to 4, characterized in that the free end of the cassette-opening member (27), which engages below the locking member (2b), is wedge-shaped.

6. Device according to one or several of claims 1 to 5, characterized in that the entrainment members (35) are provided with latch arms (35a) engaging in a hook-like fashion below the cassette-cover portion (2a).

7. Device according to one or several of claims 1 to 6, characterized in that spring-biased pressure pins (24) associated with the range of the locking device (2b, 2g) of cassette (2) are arranged on the door (5).

8. Device according to one or several of claims 1 to 7, characterized in that the door (5) is associated with an abutment (21) defining the closing position and movable beyond said closing position in opposition to the force of a spring.

9. Device according to one or several of claims 1 to 6, characterized in that the cassette-opening member (27) can be adjusted in length.

10. Device according to one or several of claims 1 to 9, characterized in that cams are mounted to shaft (10), said cams controlling a roller support (15) with rollers (18) and a door-actuating member (13) moving an entrance door (4) of the unloading and reloading station (3).

**Patentansprüche**

1. Vorrichtung zum Öffnen und Schließen einer Blattfilm-Kassette, die zwei durch ein Scharnier verbundene Kassettenhälften und ein am freien Ende des Kassettendeckels schwenkbar gelagertes Verriegelungsteil aufweist, mit einem das Verriegelungsteil betätigenden Entriegeler sowie einem den Kassettendeckel aufschwenkenden Öffner, **dadurch gekennzeichnet,** daß die Öffnungsvorrichtung einen hin- und herbewegbaren, an einem Kurbelarm (31) angelenkten Kassettenöffner (27) aufweist, daß der Kassettenöffner (27) mit seinem freien Ende das Verriegelungsteil (2b) untergreift, daß den Deckel (2a) der Kassette untergreifende Mitnehmer (35) am freien Ende des Kassettenöffners (27) schwenkbar gelagert sind und daß das freie Ende des Kassettenöffners (27) an einer Tür (5) geführt ist, die in der Öffnungsrichtung des Kassettendeckels bewegbar ist und eine Kassetten-Belade- und Entladestation (3) lichtdicht verschließt.

2. Vorrichtung nach Anspruch 1, dadurch gekennzeichnet, daß der Kurbelarm (31) an einer motorgetriebenen Welle (10) befestigt ist und daß an der Welle (10) mindestens ein Steuerarm befestigt ist, der an mindestens einer Steuerkurve (14a, 14b) eines die Tür (5) bewegenden Steuerhebels (14) angreift.

3. Vorrichtung nach Anspruch 1 und 2, dadurch gekennzeichnet, daß an der Tür (5) federbeaufschlagte Mitnehmerbleche (29) in der Öffnungsrichtung des Kassettendeckels verschiebbar geführt sind und daß das freie Ende des Kassettenöffners (27) an den Mitnehmerblechen (29) geführt ist.

4. Vorrichtung nach den Ansprüchen 1 bis 3, dadurch gekennzeichnet, daß die Mitnehmerbleche (29) unter einem etwa in der Hin- und Herbewegungsrichtung des Kassettenöffners (27) verlaufenden Winkel zur Tür (5) angeordnet sind.

5. Vorrichtung nach einem oder mehreren der Ansprüche 1 bis 4, dadurch gekennzeichnet, daß das das Verriegelungsteil (2b) untergreifende freie Ende des Kassettenöffners (27) keilförmig ausgebildet ist.

6. Vorrichtung nach einem oder mehreren der Ansprüche 1 bis 5, dadurch gekennzeichnet, daß die Mitnehmer (35) mit hakenartig den Kassettendeckel (2a) untergreifenden Fangarmen (35a) versehen sind.

7. Vorrichtung nach einem oder mehreren der Ansprüche 1 bis 6, dadurch gekennzeichnet, daß an der Tür (5) federbelastete, dem Bereich der Verriegelungseinrichtung (2b) der Kassette (2) zugeordnete Druckbolzen (24) vorgesehen sind.

8. Vorrichtung nach einem oder mehreren der Ansprüche 1 bis 7, dadurch gekennzeichnet, daß der Tür (5) ein di8e Schließstellung begrenzender, entgegen der Kraft einer Feder über die Schließstellung hinaus bewegbarer Anschlag (21) zugeordnet ist.

9. Vorrichtung nach einem oder mehreren der Ansprüche 1 bis 6, dadurch gekennzeichnet, daß der Kassettenöffner (27) längenverstellbar ausgebildet ist.

10. Vorrichtung nach einem oder mehreren der Ansprüche 1 bis 9, dadurch gekennzeichnet, daß an der Welle (10) Steuernocken befestigt sind, die einen Rollenträger (15) mit Rollen (18) und einen eine Eingangstür (4) der Belade- und Entladestation (3) bewegenden Türbetätiger (13) steuern.

**Revendications**

1. Dispositif permettant d'ouvrir et fermer une cassette de film plan qui comprend deux parties de cassette, réunies par une articulation, et un élément de verrouillage monté pivotant à l'extrémité libre de la partie formant couvercle, ce dispositif d'ouverture comprenant un élément de déverrouillage, actionnant l'élément de verrouillage, et un élément d'ouverture faisant pivoter la partie formant couvercle vers sa position ouverte, caractérisé en ce qu'il comprend un élément d'ouverture de cassette (27) qui est agencé de façon à pouvoir être déplacé dans un sens et dans l'autre et qui est articulé sur un bras de manivelle (31), en ce que, par son extrémité libre, cet élément d'ouverture de cassette (27) peut venir en prise au-dessous de l'élément de verrouillage (2b), en ce que des éléments d'entraînement (35), pouvant venir en prise au-dessous de la partie formant couvercle (2a) de la cassette, sont montés pivotants à l'extrémité libre de l'élément d'ouverture de cassette (27) et en ce que cette extrémité libre de l'élément d'ouverture de cassette (27) est guidée sur une porte (5) qui est mobile dans la direction d'ouverture de la partie formant couvercle de la cassette et qui ferme un poste de déchargement et de rechargement de cassette (3) d'une manière étanche à la lumière.

2. Dispositif suivant la revendication 1, caractérisé en ce que le bras de manivelle (31) est monté sur un axe (10) entraîné par moteur et en ce qu'au moins un bras de commande est fixé sur cet axe (10), ce bras de commande coopérant avec au moins une came (14a, 14b) d'un levier de commande (14) déplaçant la porte (5).

3. Dispositif suivant l'une quelconque des revendications 1 et 2, caractérisé en ce que des plaquettes d'entraînement (29) à ressort sont guidées sur la porte (5) de façon à pouvoir être déplacées suivant la direction d'ouverture de la partie formant couvercle de cassette et en ce que l'extrémité libre de l'élément d'ouverture de cassette (27) est guidée sur ces plaquettes d'entraînement (29).

4. Dispositif suivant l'une quelconque des revendications 1 à 3, caractérisé en ce que, par rapport à la porte (5), les plaquettes d'entraînement (29) sont disposées sous un certain angle les faisant s'étendre approximativement dans la direction du mouvement de déplacement de l'élément d'ouverture de cassette (27) dans un sens et dans l'autre.

5. Dispositif suivant l'une quelconque des revendications 1 à 4, caractérisé en ce que l'extrémité libre de l'élément d'ouverture de cassette (27) qui vient en prise au-dessous de l'élément de verrouillage (2b) est en forme de coin.

6. Dispositif suivant l'une quelconque des revendications 1 à 5, caractérisé en ce que les éléments d'entraînement (35) sont pourvus de bras de verrouillage (35a) venant en prise, à la façon d'un crochet, au-dessous de la partie formant couvercle de cassette (2a).

7. Dispositif suivant l'une quelconque des revendications 1 à 6, caractérisé en ce que des doigts de pression (24) à ressort, associés au domaine du dispositif de verrouillage (2b, 2g) de la cassette (2), sont disposés sur la porte (5).

8. Dispositif suivant l'une quelconque des revendications 1 à 7, caractérisé en ce que la porte (5) est associée à une butée (21) qui définit la position de fermeture et qui est mobile au-delà de la position de fermeture à l'encontre de l'action de la force d'un ressort.

9. Dispositif suivant l'une quelconque des revendications 1 à 6, caractérisé en ce que l'élément d'ouverture de cassette (27) peut être réglé en longueur.

10. Dispositif suivant l'une quelconque des revendications 1 à 9, caractérisé en ce que des cames sont montées sur l'axe (10), ces cames commandant un support de galets (15), comportant des galets (18), et un élément d'actionnement de porte (13) qui déplace une porte d'entrée (4) du poste de déchargement et de rechargement (3).

Fig.1

Fig.2

EP 0 360 823 B1

Fig. 3

Fig.4

Fig.5

Fig. 6

2d

2c

2e

2b

33

2    Fig. 7